# EUROPEAN PATENT APPLICATION

(11) **EP 4 806 741 A1**
(43) Date of publication of application: **16.09.2026**
(21) Application number: 26163884.5
(22) Date of filing: 11.03.2026
(51) Int. Cl.: B60T 17/00

(54) **PNEUMATIC SYSTEM WITH VALVE FOR CLOSED-LOOP CONTROL**

(30) Priority: 14.03.2025 US 202519079859
(71) Applicant: Volvo Truck Corporation, 405 08 Göteborg (SE)
(72) Inventor: BALASUBRAMANIAN, Subhash, 641046 COIMBATORE (IN); RAMASAMY, Venkatachalam, 421 50 GÖTEBORG (SE); SANDRASEKARAN, Ramachandran, 560093 BANGALORE (IN); MANICKAM, Nachiappan, 560096 BANGALORE (IN)
(74) Representative: Kransell & Wennborg KB

(57) **Abstract**

The present disclosure relates to a pneumatic system for a vehicle, the pneumatic system comprising an air compressor, an air drying unit, a first conduit connected to the air compressor and to the air drying unit for conveying pressurized air from the air compressor to the air drying unit, an air tank arranged in downstream fluid communication with the air drying unit, a second conduit connected to the air tank and to the first conduit at a position between the air compressor and the air drying unit, and a valve arranged in the second conduit for controllably feed air from the air tank to the first conduit.

## Description

### TECHNICAL FIELD

The disclosure relates generally to pneumatic systems for vehicles. In particular aspects, the disclosure relates to a pneumatic system with valve for closed-loop control. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Pneumatic systems are widely used in vehicles to supply pressurized air for various functions, including braking, suspension, and other auxiliary operations. These systems typically include an air compressor, conduits, and air storage tanks to maintain a steady supply of compressed air. Moisture management within pneumatic systems is a critical concern, as compressed air often contains water vapor that can condense under certain operating conditions. The accumulation of liquid water in system components may lead to corrosion, freezing, or blockages, negatively impacting performance and reliability. There is thus a desire to improve the pneumatic systems to avoid, or at least reduce, the accumulation of moisture in the conduits of the systems.

### SUMMARY

According to a first aspect of the disclosure, there is provided a pneumatic system for a vehicle, the pneumatic system comprising: an air compressor, an air drying unit, a first conduit connected to the air compressor and to the air drying unit for conveying pressurized air from the air compressor to the air drying unit, an air tank arranged in downstream fluid communication with the air drying unit, a second conduit connected to the air tank and to the first conduit at a position between the air compressor and the air drying unit, and a valve arranged in the second conduit to controllably feed air from the air tank to the first conduit. The first aspect of the disclosure may seek to prevent condensation-related issues in the pneumatic system of a vehicle, which may occur when the vehicle has been stationary for a period of time. When a vehicle is at e.g. idle or engine is turned off, temperature fluctuations may cause moisture in the compressed air to condense within the conduits and components of the system, which may lead to water accumulation, corrosion, freezing, and blockages. By incorporating a first conduit connecting the air compressor to an air drying unit, and a second conduit enabling controlled recirculation of dry air from an air tank to a location upstream of the drying unit, the system may actively reduce residual moisture in critical areas before condensation occurs. Furthermore, the inclusion of a valve in the second conduit may allow for selective air purging or recirculation, ensuring that the areas prone to condensation can remain dry even during prolonged vehicle inactivity, thereby improving system reliability and cold-weather performance. A technical benefit may include that moisture accumulation can be reduced within the pneumatic system, particularly after the vehicle has been stationary for an extended period and the air compressor has not been operated during this extended period. When a vehicle is parked, the lack of airflow and cooling effects can cause trapped moisture to condense, which may lead to corrosion, freezing, and potential system malfunctions upon startup. By utilizing an air drying unit downstream of the air compressor, the system ensures that only dry air is stored in the air tank, minimizing the presence of moisture in the system. The second conduit and valve enable controlled recirculation of this dry air to a position upstream of the air drying unit, which may prevent residual moisture from accumulating in the conduits. The controlled recirculation of dry air through the second conduit may enhance reliability, particularly in cold-weather conditions, by ensuring that key pneumatic components remain free from ice formation. Additionally, controlled dry air recirculation may improve energy efficiency by reducing the need for unnecessary purging or excessive drying cycles, thereby improving overall system performance.

Optionally in some examples, including in at least one preferred example, the valve is a solenoid valve. A technical benefit may include that precise and automated control over the airflow within the pneumatic system can be enabled. A solenoid valve may allow for rapid and reliable switching between open and closed states, which can improve response times and reduce manual intervention. Additionally, the solenoid valve may facilitate integration with electronic control systems for enhanced efficiency and adaptability.

Optionally in some examples, including in at least one preferred example, the pneumatic system further comprises a one-way valve arranged in the second conduit in fluid communication between the valve and first conduit. A technical benefit may include that reverse airflow in the second conduit can be prevented, ensuring that dry air flows in the intended direction toward the first conduit and not back to the air tank.

Optionally in some examples, including in at least one preferred example, the pneumatic system further comprises an air heater, the air heater being arranged in the second conduit in fluid communication between the valve and first conduit. A technical benefit may include that the risk of condensation and ice formation by increasing the temperature of the air before the air enters the first conduit can be reduced. The air heater may be particularly advantageous in cold-weather conditions where freezing could impair pneumatic system performance and reliability.

Optionally in some examples, including in at least one preferred example, the one-way valve is arranged in fluid communication between the valve and the air heater. A technical benefit may include that heated air can flow efficiently toward the first conduit without being lost or redirected back toward the air tank. Positioning the one-way valve between the valve and the air heater may improve heating effectiveness while maintaining the overall efficiency of the pneumatic system.

Optionally in some examples, including in at least one preferred example, the air drying unit comprises a moisture removal structure. A technical benefit may include that the removal of water vapor from compressed air can be enhanced, thereby preventing condensation-related issues such as corrosion and freezing. The moisture removal structure may lead to improved long-term reliability of the pneumatic system.

Optionally in some examples, including in at least one preferred example, the moisture removal structure is configured to provide pressurized air with a dew point depression exceeding a predetermined threshold level downstream of the air drying unit. A technical benefit may include that the air can remain sufficiently dry to prevent condensation under expected operating conditions. By achieving a dew point depression beyond a predetermined threshold, the moisture removal structure may enable the pneumatic system to operate more reliably in varying environmental conditions, including high humidity and low temperatures. According to a non-limiting example, the predetermined threshold level may be 30°C.

Optionally in some examples, including in at least one preferred example, the pneumatic system further comprises a computer system comprising processing circuitry operably coupled to the valve and the air compressor, the processing circuitry being configured to control the air compressor to be arranged in an activated state or a deactivated state, and to control the valve to be arranged in an open state or a closed state. A technical benefit may include automated control of the pneumatic system can be provided based on real-time conditions, improving operational efficiency and reducing energy consumption.

Optionally in some examples, including in at least one preferred example, the processing circuitry is configured to control the valve to be arranged in the open state when controlling the air compressor to be deactivated. A technical benefit may include that dry air is automatically introduced into the first conduit when the air compressor is inactive, helping to maintain a dry environment within the pneumatic system. Controlling the valve to open when the air compressor is deactivated may further reduce condensation risks, particularly when the vehicle is stationary for an extended period.

Optionally in some examples, including in at least one preferred example, the processing circuitry is configured to: determine a pressure level in the air tank, and in response to the pressure level reaching a first predetermined threshold limit: control the air compressor to be arranged in the deactivated state, and control the valve to be arranged in the open position. A technical benefit may include that excessive pressurization of the air tank can be prevented while ensuring efficient air usage. By deactivating the air compressor and opening the valve based on a pressure threshold, the processing circuitry may reduce wear on components and optimize energy consumption.

Optionally in some examples, including in at least one preferred example, the processing circuitry is further configured to: control the air compressor to be arranged in the activated state and the valve to be arranged in the closed position in response to the pressure level falling below a second predetermined threshold limit, the second predetermined threshold limit being lower than the first predetermined threshold limit. A technical benefit may include a sufficient air pressure can be maintained within the pneumatic system by automatically reactivating the air compressor when necessary. Controlling the air compressor to activate and the valve to close based on a second threshold limit may ensure a continuous and reliable supply of pressurized air.

Optionally in some examples, including in at least one preferred example, the pneumatic system further comprises a pressure sensor arranged in the air tank. A technical benefit may include that real-time monitoring of air pressure within the air tank is possible, which allows for automated adjustments.

Optionally in some examples, including in at least one preferred example, the processing circuitry is operatively coupled to the pressure sensor. A technical benefit may include responsive and adaptive control of the pneumatic system can be provided based on real-time pressure readings. The operative coupling between the processing circuitry and the pressure sensor may improve efficiency by ensuring that the air compressor and valve operate only when needed.

Optionally in some examples, including in at least one preferred example, the air tank comprises a plurality of air tank chambers, each of the air tank chambers being configured to store air at different pressure levels. A technical benefit may include that air distribution may be optimized by maintaining different pressure levels for various pneumatic functions. The plurality of air tank chambers may allow the pneumatic system to efficiently supply air where it is needed without overloading or under-supplying specific components.

Optionally in some examples, including in at least one preferred example, the air compressor is an electrically operable air compressor. A technical benefit may include that the energy efficiency can be improved. An electrically operable air compressor may also reduce emissions compared to traditional mechanically driven compressors. Further, an electrically operable air compressor may allow for more precise control over air compression cycles, leading to optimized system performance.

According to a second aspect, there is provided a vehicle comprising the pneumatic system according to any of the examples described above in relation to the first aspect.

Optionally in some examples, including in at least one preferred example, the pneumatic system is operatively coupled to feed pressurized air to a pneumatically controlled brake system of the vehicle. A technical benefit may include that a reliable and consistent supply of dry pressurized air to the vehicle's braking system can be assured, thereby reducing the risk of moisture-related issues such as ice formation or corrosion within brake components. The operative coupling between the pneumatic system and the brake system may enhance braking performance, particularly in cold or humid environments, leading to improved safety, as well as improving the operational lifetime of the system.

Further effects and features of the second aspect are largely analogous to those described above in relation to the first aspect.

According to a third aspect, there is provided a method of controlling a pneumatic system, the method comprising: determining a pressure level of an air tank of the pneumatic system, and in response to the pressure level being below a first predetermined threshold limit: controlling an air compressor, arranged upstream of the air tank via a first conduit, to be arranged in an activated state to feed pressurized air to the air tank via an air drying unit, and controlling a valve, arranged in a second conduit and positioned downstream of the air tank, to be arranged in a closed state. The third aspect of the disclosure may seek to prevent condensation-related issues in the pneumatic system of a vehicle, which may occur when the vehicle has been stationary for a period of time. When a vehicle is at idle or the engine is turned off, temperature fluctuations may cause moisture in the compressed air to condense within the conduits and components of the system, which may lead to water accumulation, corrosion, freezing, and blockages. By determining the pressure level in the air tank and, in response, controlling the activation state of the air compressor and the state of the valve, the method may actively regulate airflow to minimize residual moisture in critical areas before condensation occurs. Furthermore, the method may ensure that the valve remains closed while the air compressor is activated, preventing unwanted airflow paths and optimizing system efficiency. By implementing the control strategy, the method may improve system reliability and cold-weather performance, particularly when the vehicle has been inactive for an extended period. A technical benefit may include that moisture accumulation may be reduced within the pneumatic system, particularly after the vehicle has been stationary for an extended period and the air compressor has not been operated during this period. When a vehicle is parked and the compressor is inactive, the lack of airflow and cooling effects can cause trapped moisture to condense, which may lead to corrosion, freezing, and potential system malfunctions upon startup. By determining the pressure level in the air tank and, in response, controlling the air compressor and valve accordingly, the method ensures that the system maintains a dry air supply before condensation can form. The controlled regulation of air pressure and valve operation may enhance reliability, particularly in cold-weather conditions, by ensuring that key pneumatic components remain free from ice formation. Additionally, controlling the activation of the air compressor based on a predetermined pressure threshold may improve energy efficiency by ensuring that the air compressor operates only when necessary. The method may prevent excessive air loss by keeping the valve closed during air compression, thereby optimizing air pressure management and reducing unnecessary drying cycles.

Optionally in some examples, including in at least one preferred example, the method further comprises: controlling the air compressor to be arranged in the deactivated state and the valve to be arranged in the open state in response to the pressure level of the air tank reaching the first predetermined threshold limit, wherein air from the air tank is fed through the second conduit and into the first conduit at a position between the air compressor and the air drying unit. A technical benefit may include that it may be ensured that dry air is introduced into the first conduit at a controlled time, helping to maintain a low-moisture environment in the system when the air compressor is not operating. By allowing air from the air tank to flow through the second conduit upon reaching the first predetermined threshold limit, the method may prevent residual moisture from accumulating in the first conduit and other system components, thereby improving overall system reliability and reducing the risk of condensation-related issues.

Optionally in some examples, including in at least one preferred example, the method further comprises: controlling the air compressor to be arranged in the activated state and the valve to be arranged in the closed state in response to the pressure level in the air tank falling from first predetermined threshold limit to a second predetermined threshold limit. A technical benefit may include that air pressure management within the pneumatic system can be optimized by ensuring that the air compressor is only activated when necessary. By closing the valve while the air compressor is active, the method may prevent unnecessary airflow disruptions and ensure that pressurized air is efficiently supplied to the air tank.

Further effects and features of the third aspect are largely analogous to those described above in relation to the first and second aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
Fig. 1 is an exemplary illustration of a vehicle according to an example.
Fig. 2 is an exemplary schematic illustration of a pneumatic system according to an example.
Fig. 3 is an exemplary schematic illustration of a pneumatic system according to an example.
Fig. 4 is an exemplary schematic illustration of a pneumatic system according to an example.
Fig. 5 is an exemplary flow chart of a method of controlling the pneumatic system according to an example.
Fig. 6 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The disclosure described in the following aims at reducing the risk of condensation accumulation in a pneumatic system. A technical benefit may include that condensation and moisture accumulation can be reduced within the pneumatic system, particularly after the vehicle has been stationary for an extended period and the air compressor has not been operated during this extended period. Avoiding condensation and moisture may in turn reduce the risk of water accumulation, corrosion, freezing, and blockages within the pneumatic system.

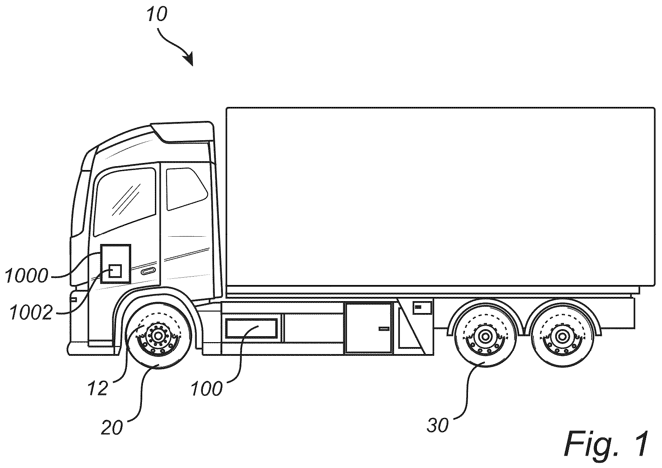

Reference is made to Fig. 1 which is an exemplary illustration of a vehicle 10 according to an example. The vehicle 10 comprises a non-illustrated traction motor, which may be an internal combustion engine or an electric traction motor, or a combination of internal combustion engine and electric traction motor. The vehicle 10 further comprises a wheel brake arrangement 12 which acts as a service brake for the vehicle. The wheel brake arrangement 12 is depicted as connected to the pair of front wheels 20 of the vehicle 10. However, it should be readily understood that the wheel brake arrangement 12 may alternatively, or additionally, be connected to any of the rear wheels 30 of the vehicle 10.

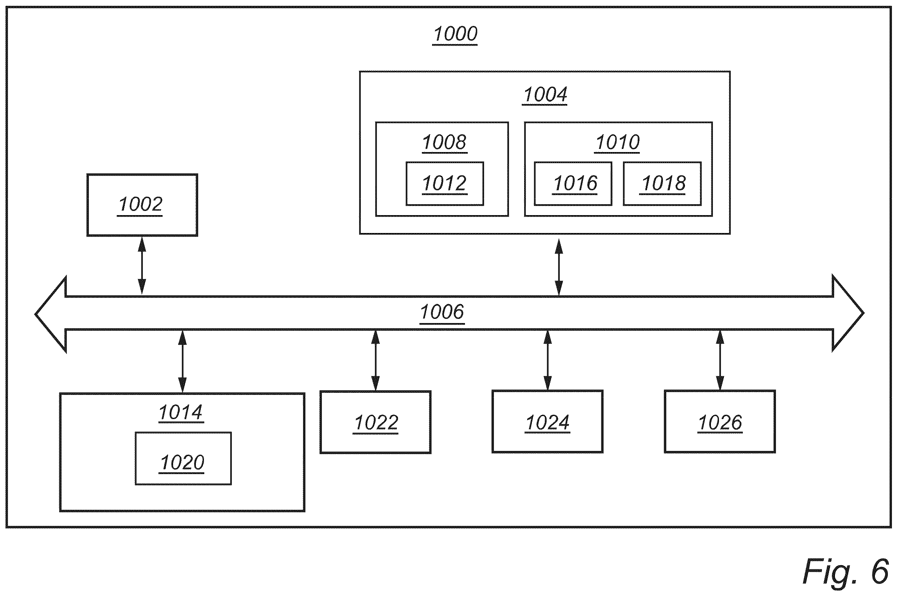

The vehicle 10 further comprises a pneumatic system 100. The pneumatic system 100 is arranged to contain and feed pressurized air to one or more air consumers of the vehicle 10. The above described wheel brake arrangement 12 may, for example be such an air consumer. The wheel brake arrangement 12 may thus be a pneumatically controlled brake system of the vehicle 10. The vehicle 10 further comprises a computer system 1000 having processing circuitry 1002 configured to control the operation of the pneumatic system 100 according to the below description. Exemplified details of the computer system 1000 and the processing circuitry 1002 will be given below in relation to the description of Fig. 6.

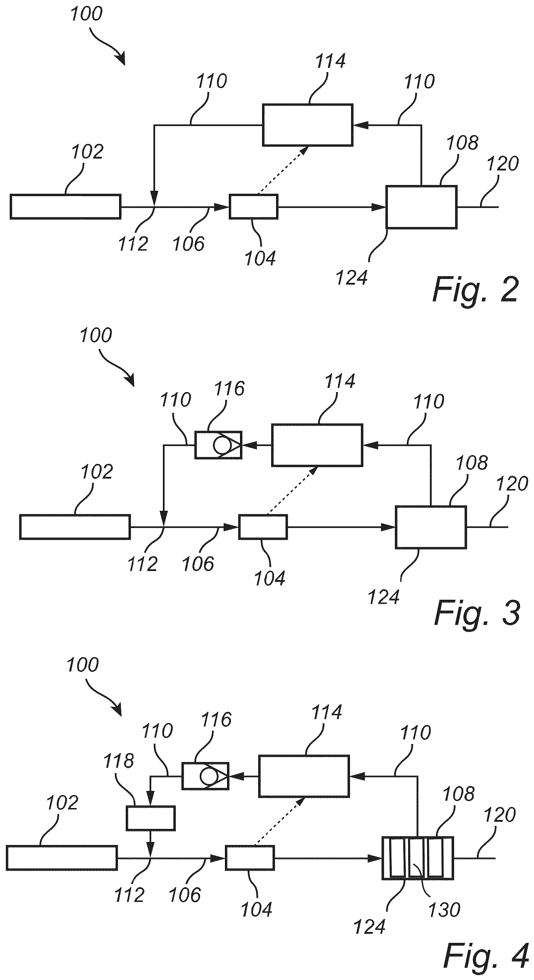

Reference is now made to Fig. 2 for describing the pneumatic system 100 according to an example. The pneumatic system 100 comprises an air compressor 102, which is configured to supply pressurized air. The air compressor 102 may be connected to a power source (not shown) of the vehicle 10. According to an example, the air compressor is an electrically operable air compressor. The air compressor 102 may preferably pressurize a flow of ambient air. A first conduit 106 is connected to the air compressor 102 and an air drying unit 104 to convey pressurized air from the air compressor 102 to the air drying unit 104. According to an example, the air drying unit 104 may comprise a moisture removal structure, which is configured to remove moisture from the pressurized air. The moisture removal structure may be configured to provide pressurized air with a dew point depression exceeding a predetermined threshold level downstream of the air drying unit 104. The term "dew point depression" refers to the difference between the temperature of the air and its dew point temperature, where the dew point temperature is the temperature at which condensation begins to form. A greater dew point depression indicates drier air, which may help reduce the risk of moisture accumulation within the pneumatic system 100, thereby minimizing the potential for corrosion, freezing, or blockages in downstream components.

Furthermore, the pneumatic system 100 comprises an air tank 108 arranged downstream of the air drying unit 104, i.e. in downstream fluid communication with the air drying unit 104. The air tank 108 is arranged to store the dried, pressurized air. Also, the pneumatic system comprises a second conduit 110 which extends from the air tank 108 and connects to the first conduit 106 at a position 112 between the air compressor 102 and the air drying unit 104. Further, a valve 114 is arranged in the second conduit 110. According to an example, the valve 114 may be a solenoid valve. The valve 114 is configured to controllably feed air from the air tank 108 into the first conduit 106 at the position 112. By utilizing a solenoid valve, the opening and closing of the valve 114 may be electronically controlled.

The exemplified pneumatic system 100 also comprises an air outlet 120, which is arranged in the air tank 108. The air outlet 120 is in fluid communication with the above described air consumer of the vehicle 10, allowing pressurized air stored in the air tank 108 to be supplied as needed. The air consumer may be any component that utilizes compressed air, such as a pneumatically controlled brake system. The air outlet 120 may thus provide direct and efficient transfer of pressurized air to the air consumer. It should be understood that a valve or the like may be arranged between the air outlet 120 and the air consumer.

Additionally, the exemplified pneumatic system 100 comprises a pressure sensor 124 arranged in the air tank 108. The pressure sensor 124 is configured to detect the pressure level within the air tank 108 to enable monitoring of the stored pressurized air. Also, although not illustrated in detail, the above described processing circuitry 1002 is arranged to control operation of the valve 114. The processing circuitry 1002 may be arranged and operated by the air drying unit 104 which is illustrated by the dashed line in Fig. 2.

The pneumatic system 100 operates under controlled conditions to regulate airflow, manage pressure levels, and supply dry, pressurized air efficiently. To enable automated control, the pneumatic system 100 comprises the above described processing circuitry 1002, which may be operably coupled to the valve 114 and the air compressor 102. The exemplified processing circuitry 1002 is configured to control the activation and deactivation of the air compressor 102, as well as the open and closed states of the valve 114. In particular, the processing circuitry 1002 may control the air compressor 102 and the valve 114 in response to system conditions, such as the pressure level in the air tank 108.

During operation, the processing circuitry 1002 continuously monitors the pressure level within the air tank 108. In particular, the processing circuitry 1002 may receive data from the pressure sensor 124 arranged in the air tank 108. Hereby, current pressure level of the pressurized air in the air tank 108 can be detected. The detected pressure level is hence transmitted from the pressure sensor 124 to the processing circuitry 1002, which processes the data and determines whether adjustments to the pneumatic system 100 are required.

If the pressure level in the air tank 108 is lower than a first predetermined threshold limit, the processing circuitry 1002 may control the air compressor 102 to be arranged in an activated state, allowing pressurized air to be generated and fed to the air drying unit 104 via the first conduit 106. The air drying unit 104, which may include a moisture removal structure, removes moisture from the pressurized air before directing the dried air into the air tank 108. At the same time, the processing circuitry 1002 may control the valve 114 to be arranged in the closed state, preventing air from flowing from the air tank 108 back into the first conduit 106 during the pressurization phase.

When the pressure level in the air tank 108 reaches the first predetermined threshold limit, the processing circuitry 1002 may adjust system operation accordingly. In particular, in response to reaching the first threshold limit, the processing circuitry 1002 may control the air compressor 102 to be arranged in the deactivated state, stopping further pressurization of the air tank 108. Hence, in the deactivated state, the air compressor is not operational. At the same time, the processing circuitry 1002 may control the valve 114 to be arranged in the open state, allowing air stored in the air tank 108 to flow through the second conduit 110 and into the first conduit 106 at the position 112 between the air compressor 102 and the air drying unit 104. Hereby, dry air from the air tank 108 can be fed to the first conduit 106 between the air compressor 102 and the air drying unit 104.

However, if the pressure level in the air tank 108 subsequently drops from the first predetermined threshold limit to a second predetermined threshold limit, which second predetermined threshold limit is lower than the first predetermined threshold limit, the processing circuitry 1002 may initiate another control action. Specifically, the processing circuitry 1002 may control the air compressor 102 to be arranged in the activated state to restore the pressure level in the air tank 108. At the same time, the processing circuitry 1002 controls the valve 114 to be arranged in the closed state, preventing unnecessary loss of pressurized air during re-pressurization. This cyclic operation may keep the pneumatic system 100 in a stable operating condition while minimizing energy consumption and air loss.

By continuously monitoring the pressure level in the air tank 108 and dynamically adjusting the activation of the air compressor 102 and the state of the valve 114 as described above, the processing circuitry 1002 may allow for efficient operation of the pneumatic system 100.

Reference is now made to Fig. 3, which illustrates a pneumatic system 100 according to an example. The pneumatic system 100 in Fig. 3 comprises the same features and has similar functionalities as the pneumatic system described above in relation to Fig. 2. However, the pneumatic system 100 depicted in Fig. 3 further comprises a one-way valve 116 arranged in the second conduit 110.

The exemplified one-way valve 116 is positioned in fluid communication between the valve 114 and the first conduit 106. In detail, the one-way valve 116 is arranged between the valve 114 and the position 112 of the first conduit 106 between the air compressor 102 and the air drying unit 104. The one-way valve 116 is configured to allow airflow from the air tank 108 toward the first conduit 106 while preventing reverse airflow. By restricting air movement in one direction, the one-way valve 116 may help to maintain proper system operation by controlling that pressurized air flows only as intended, thereby preventing potential pressure fluctuations or unintended mixing of air from different sections of the pneumatic system 100.

Reference is now made to Fig. 4, which illustrates a pneumatic system 100 according to an example. The pneumatic system 100 comprises the same features and has similar functionalities as the pneumatic system described in relation to Figs. 2 and 3. However, the pneumatic system depicted in Fig. 4 further comprises an air heater 118 arranged in the second conduit 110.

The exemplified air heater 118 is positioned in fluid communication between the valve 114 and the first conduit 106. In particular, the air heater is arranged between the valve 114 and the position 112 of the first conduit 106 between the air compressor 102 and the air drying unit 104. The air heater 118 is configured to heat the air flowing through the second conduit 110 before it reaches the first conduit 106. By increasing the temperature of the dry air, the air heater 118 may help to reduce the risk of condensation or freezing in the pneumatic system 100, particularly in e.g. cold environments.

Additionally, the one-way valve 116, which is arranged in the second conduit 110, may be positioned in fluid communication between the valve 114 and the air heater 118 as depicted in Fig. 4. This arrangement may allow air to pass through the one-way valve 116 and the air heater 118 before reaching the first conduit 106, while preventing backflow of air toward the air tank 108. Hereby, the pneumatic system may be controlled to direct heated air toward the first conduit 106 in a controlled manner.

Furthermore, the air tank 108 may comprise a plurality of air tank chambers 130 as depicted in Fig. 4. Each air tank chamber 130 may be configured to store air at different pressure levels. By utilizing multiple chambers, the pneumatic system 100 may allow for more controlled air distribution, where different pressure levels can be maintained for various air consumers of the vehicle 10. The inclusion of multiple air tank chambers 130 may optimize the performance of the pneumatic system 100 by reducing unnecessary pressurization cycles and allowing air to be supplied efficiently according to the demands of different pneumatic functions.

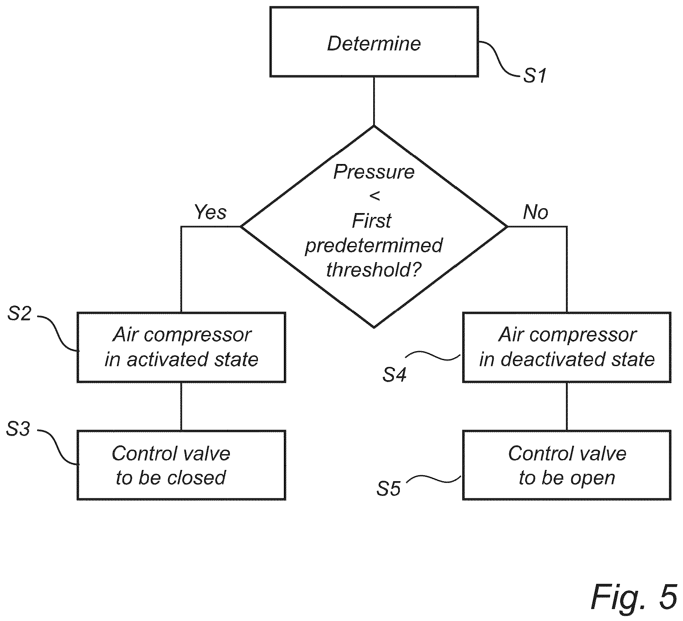

In order to sum up, reference is made to Fig. 5, which illustrates a flow chart of a method of controlling the above-described pneumatic system 100. During operation of the pneumatic system 100, the pressure level of the air tank 108 is determined S1. The determination may be performed by the processing circuitry 1002 based on data received from the pressure sensor 124 arranged in the air tank 108.

Following the determination S1, the processing circuitry 1002 evaluates whether the pressure level of the air tank 108 is below a first predetermined threshold limit. If the pressure level is below this threshold, the processing circuitry 1002 controls S2 the air compressor 102 to be arranged in an activated state, allowing pressurized air to be generated and supplied to the air tank 108 via the first conduit 106 and the air drying unit 104. At the same time, or substantially the same time, the processing circuitry 1002 controls S3 the valve 114, arranged in the second conduit 110, to be in a closed state to prevent air from flowing from the air tank 108 into the first conduit 106 during the pressurization phase.

If, instead, the pressure level is at or above the first predetermined threshold limit, the processing circuitry 1002 controls S4 the air compressor 102 to be arranged in a deactivated state, stopping further pressurization of the air tank 108. At the same time, or substantially the same time, the processing circuitry 1002 controls S5 the valve 114 to be arranged in an open state, allowing air from the air tank 108 to flow through the second conduit 110 and into the first conduit 106 at the position 112 between the air compressor 102 and the air drying unit 104.

The method may further comprise an additional control action if the pressure level in the air tank 108 subsequently decreases from the first predetermined threshold limit to a second predetermined threshold limit, which second predetermined threshold limit is lower than the first predetermined threshold limit. In such a case, the method returns to S2 and S3, where the processing circuitry 1002 reactivates the air compressor 102 and closes the valve 114, thereby restoring the pressure level in the air tank 108 while preventing unnecessary air loss.

By dynamically controlling the activation of the air compressor 102 and the operation of the valve 114 based on the detected pressure level, the method may contribute to efficient air management in the pneumatic system 100 while reducing unnecessary energy consumption and minimizing moisture-related issues within the system.

FIG. 6 is a schematic diagram of a computer system 1000 for implementing examples disclosed herein. The computer system 1000 is adapted to execute instructions from a computer-readable medium to perform these and/or any of the functions or processing described herein. The computer system 1000 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 1000 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 1000 may comprise at least one computing device or electronic device capable of including firmware, hardware, and/or executing software instructions to implement the functionality described herein. The computer system 1000 may include processing circuitry 1002 (e.g., processing circuitry including one or more processor devices or control units), a memory 1004, and a system bus 1006. The computer system 1000 may include at least one computing device having the processing circuitry 1002. The system bus 1006 provides an interface for system components including, but not limited to, the memory 1004 and the processing circuitry 1002. The processing circuitry 1002 may include any number of hardware components for conducting data or signal processing or for executing computer code stored in memory 1004. The processing circuitry 1002 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 1002 may further include computer executable code that controls operation of the programmable device.

The system bus 1006 may be any of several types of bus structures that may further interconnect to a memory bus (with or without a memory controller), a peripheral bus, and/or a local bus using any of a variety of bus architectures. The memory 1004 may be one or more devices for storing data and/or computer code for completing or facilitating methods described herein. The memory 1004 may include database components, object code components, script components, or other types of information structure for supporting the various activities herein. Any distributed or local memory device may be utilized with the systems and methods of this description. The memory 1004 may be communicably connected to the processing circuitry 1002 (e.g., via a circuit or any other wired, wireless, or network connection) and may include computer code for executing one or more processes described herein. The memory 1004 may include non-volatile memory 1008 (e.g., read-only memory (ROM), erasable programmable read-only memory (EPROM), electrically erasable programmable read-only memory (EEPROM), etc.), and volatile memory 1010 (e.g., random-access memory (RAM)), or any other medium which can be used to carry or store desired program code in the form of machine-executable instructions or data structures and which can be accessed by a computer or other machine with processing circuitry 1002. A basic input/output system (BIOS) 1012 may be stored in the non-volatile memory 1008 and can include the basic routines that help to transfer information between elements within the computer system 1000.

The computer system 1000 may further include or be coupled to a non-transitory computer-readable storage medium such as the storage device 1014, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 1014 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 1014 and/or in the volatile memory 1010, which may include an operating system 1016 and/or one or more program modules 1018. All or a portion of the examples disclosed herein may be implemented as a computer program 1020 stored on a transitory or non-transitory computer-usable or computer-readable storage medium (e.g., single medium or multiple media), such as the storage device 1014, which includes complex programming instructions (e.g., complex computer-readable program code) to cause the processing circuitry 1002 to carry out actions described herein. Thus, the computer-readable program code of the computer program 1020 can comprise software instructions for implementing the functionality of the examples described herein when executed by the processing circuitry 1002. In some examples, the storage device 1014 may be a computer program product (e.g., readable storage medium) storing the computer program 1020 thereon, where at least a portion of a computer program 1020 may be loadable (e.g., into a processor) for implementing the functionality of the examples described herein when executed by the processing circuitry 1002. The processing circuitry 1002 may serve as a controller or control system for the computer system 1000 that is to implement the functionality described herein.

The computer system 1000 may include an input device interface 1022 configured to receive input and selections to be communicated to the computer system 1000 when executing instructions, such as from a keyboard, mouse, touch-sensitive surface, etc. Such input devices may be connected to the processing circuitry 1002 through the input device interface 1022 coupled to the system bus 1006 but can be connected through other interfaces, such as a parallel port, an Institute of Electrical and Electronic Engineers (IEEE) 1394 serial port, a Universal Serial Bus (USB) port, an IR interface, and the like. The computer system 1000 may include an output device interface 1024 configured to forward output, such as to a display, a video display unit (e.g., a liquid crystal display (LCD) or a cathode ray tube (CRT)). The computer system 1000 may include a communications interface 1026 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A pneumatic system for a vehicle, the pneumatic system comprising:
- an air compressor,
- an air drying unit,
- a first conduit connected to the air compressor and to the air drying unit for conveying pressurized air from the air compressor to the air drying unit,
- an air tank arranged in downstream fluid communication with the air drying unit,
- a second conduit connected to the air tank and to the first conduit at a position between the air compressor and the air drying unit, and
- a valve arranged in the second conduit to controllably feed air from the air tank to the first conduit.

2. The pneumatic system of claim 1, wherein the valve is a solenoid valve.

3. The pneumatic system of claim 1, further comprising a one-way valve arranged in the second conduit in fluid communication between the valve and first conduit.

4. The pneumatic system of claim 1, further comprising an air heater, the air heater being arranged in the second conduit in fluid communication between the valve and first conduit.

5. The pneumatic system of claim 4 when dependent on claim 3, wherein the one-way valve is arranged in fluid communication between the valve and the air heater.

6. The pneumatic system of claim 1, wherein the air drying unit comprises a moisture removal structure.

7. The pneumatic system of claim 6, wherein the moisture removal structure is configured to provide pressurized air with a dew point depression exceeding a predetermined threshold level downstream of the air drying unit.

8. The pneumatic system of claim 1, further comprising a computer system comprising processing circuitry operably coupled to the valve and the air compressor, the processing circuitry being configured to control the air compressor to be arranged in an activated state or a deactivated state, and to control the valve to be arranged in an open state or a closed state.

9. The pneumatic system of claim 8, wherein the processing circuitry is configured to control the valve to be arranged in the open state when controlling the air compressor to be deactivated.

10. The pneumatic system of claim 8, wherein the processing circuitry is configured to:
- determine a pressure level in the air tank, and in response to the pressure level reaching a first predetermined threshold limit:
- control the air compressor to be arranged in the deactivated state, and
- control the valve to be arranged in the open position.

11. The pneumatic system of claim 10, wherein the processing circuitry is further configured to:
- control the air compressor to be arranged in the activated state and the valve to be arranged in the closed position in response to the pressure level falling below a second predetermined threshold limit, the second predetermined threshold limit being lower than the first predetermined threshold limit.

12. The pneumatic system of claim 1, further comprising a pressure sensor arranged in the air tank.

13. The pneumatic system of claim 12 when dependent on claim 8, wherein the processing circuitry is operatively coupled to the pressure sensor.

14. The pneumatic system of claim 1, wherein the air tank comprises a plurality of air tank chambers, each of the air tank chambers being configured to store air at different pressure levels.

15. The pneumatic system of claim 1, wherein the air compressor is an electrically operable air compressor.

16. A vehicle comprising the pneumatic system according to claim 1.

17. The vehicle of claim 16, wherein the pneumatic system is operatively coupled to feed pressurized air to a pneumatically controlled brake system of the vehicle.

18. A method of controlling a pneumatic system, the method comprising:
- determining a pressure level of an air tank of the pneumatic system, and in response to the pressure level being below a first predetermined threshold limit:
- controlling an air compressor, arranged upstream of the air tank via a first conduit, to be arranged in an activated state to feed pressurized air to the air tank via an air drying unit, and
- controlling a valve, arranged in a second conduit and positioned downstream of the air tank, to be arranged in a closed state.

19. The method of claim 18, further comprising:
- controlling the air compressor to be arranged in the deactivated state and the valve to be arranged in the open state in response to the pressure level of the air tank reaching the first predetermined threshold limit, wherein air from the air tank is fed through the second conduit and into the first conduit at a position between the air compressor and the air drying unit.

20. The method of claim 19, further comprising:
- controlling the air compressor to be arranged in the activated state and the valve to be arranged in the closed state in response to the pressure level in the air tank falling from first predetermined threshold limit to a second predetermined threshold limit.
